Europäisches Patentamt

European Patent Office

Office européen des brevets

(19)

(11) Numéro de publication : **0 160 197**
**B1**

(12)                    ## FASCICULE DE BREVET EUROPÉEN

(45) Date de publication du fascicule du brevet :
17.05.89

(51) Int. Cl.⁴ : **G 01 S   5/08**

(21) Numéro de dépôt : **85103070.0**

(22) Date de dépôt : **16.03.85**

(54) Appareil d'identification d'un signal composite périodique formé d'un train de signaux élémentaires.

(30) Priorité : 30.03.84 CH 1630/84

(43) Date de publication de la demande :
06.11.85 Bulletin 85/45

(45) Mention de la délivrance du brevet :
17.05.89 Bulletin 89/20

(84) Etats contractants désignés :
DE FR GB IT SE

(56) Documents cités :
DE--A-- 1 774 019
FR--A-- 2 306 452
GB--A-- 2 007 059
GB--A-- 2 047 039
GB--A-- 2 101 833
US--A-- 4 319 541

(73) Titulaire : **Effront, Yves**
**Rue des Granges 6**
**CH-1204 Genève (CH)**

(72) Inventeur : **Effront, Yves**
**Rue des Granges 6**
**CH-1204 Genève (CH)**

(74) Mandataire : **Robert, Jean S.**
**51, route du Prieur**
**CH-1257 Landecy (Genève) (CH)**

## Description

La présente invention a pour objet un appareil d'identification d'un signal composite périodique formé d'un train de signaux élémentaires dont le nombre et la cadence constituent la caractéristique de leur émetteur et, par là, d'identifier cet émetteur.

Le présent appareil s'adresse à tous les navigateurs, mais plus spécialement aux plaisanciers, qui doivent relever la position d'émetteurs de signaux périodiques, en particulier de phares de marine, et, pour cela, identifier l'émetteur, souvent dans des conditions difficiles.

Le but de l'invention est de fournir aux navigateurs un moyen d'identification des émetteurs de signaux qui soit fiable, aisé à manipuler, peu encombrant et d'un prix raisonnable.

Ce but est atteint grâce aux moyens définis dans la revendication 1.

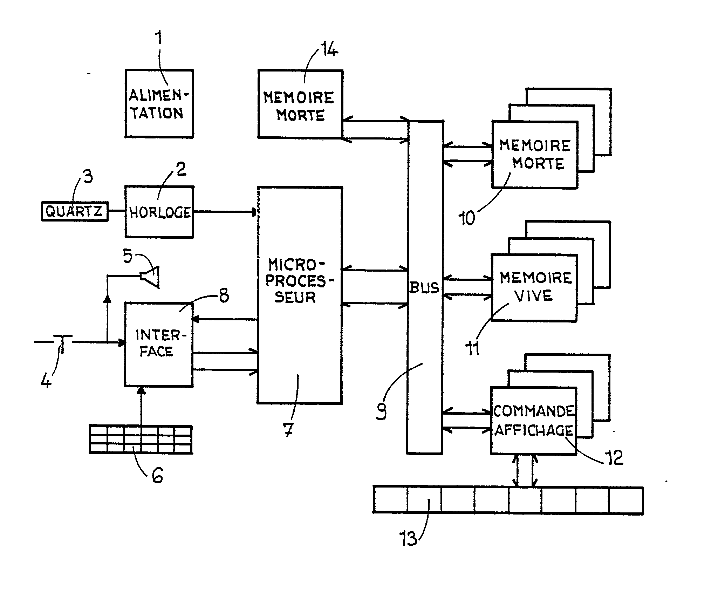

Il est connu du document britannique GB-A-2 047 039 un appareil destiné à fournir des indications sur une direction, ou plus exactement sur deux directions simultanément, comme l'indique la figure 2, alors que le présent appareil ne sert aucunement à indiquer la direction dans laquelle se trouve un point déterminé par rapport à l'observateur, mais à identifier un signal permettant, par là, d'identifier son émetteur et, par conséquent, permettant à l'utilisateur de savoir au large de quel émetteur il se trouve. L'appareil de l'invention ne permet donc pas à son utilisateur de fixer sa position, mais de savoir dans quelle région il se trouve.

Il est à relever que l'appareil du document britannique ne comporte pas de moyens d'introduction humaine (manuelle ou autre) des indications relevées, mais des moyens automatiques d'enregistrement de signaux. Il en résulte, ipso facto, que l'appareil de ce document, contrairement à l'appareil objet de la présente invention, n'a pas besoin de moyens de traitement d'erreur nécessités par la déformation inéluctable du signal relevé humainement.

Le dessin représente, à titre d'exemple, une forme d'exécution de l'objet de l'invention.

La figure unique est un schéma-bloc du circuit d'un appareil d'identification de signaux.

L'appareil représenté comprend une alimentation 1, par batterie ou piles, une horloge 2 pilotée par un quartz 3, un interrupteur 4 actionnable manuellement, par bouton-poussoir ou touche, permettant à l'opérateur de répéter les signaux de l'émetteur qu'il observe et, par là, d'introduire dans l'appareil des impulsions à une cadence correspondant à celle des signaux élémentaires dont est formé le signal composite périodique produit par l'émetteur, un témoin de contrôle 5 de l'introduction desdites impulsions, optique ou acoustique, constitué par exemple par un vibreur ou haut-parleur.

Il comprend également un clavier de commande 6, qui n'est pas indispensable mais utile, permettant l'introduction, dans l'appareil, d'instructions particulières, un microprocesseur 7 gérant le fonctionnement de l'appareil, et une interface électronique 8 interposée entre l'interrupteur de commande 4 et le clavier de commande 6 d'une part et le microprocesseur 7 d'autre part, cette interface comprenant, entre autres, un circuit électronique de comptage transformant les intervalles de temps séparant l'entrée des impulsions dans l'appareil, mesurés par l'horloge 2, en valeurs numériques et les arrondissant. L'appareil comprend en outre un bus 9 permettant le transfert de données et d'adresses ainsi que les ordres de contrôle du microprocesseur, un ou plusieurs modules de mémoire morte (MEM) 10, amovibles et interchangeables, destinés à stocker des informations constituant une table de référence, un ou plusieurs modules de mémoire vive (MEV) 11 pouvant contenir les valeurs exactes, numérisées et arrondies, des intervalles de temps séparant les entrées des impulsions produites par l'opérateur, un circuit 12 de commande d'affichage, un dispositif d'affichage 13, à cristaux liquides, commandé par le circuit 12, et enfin un ou plusieurs modules de mémoire morte (MEM) 14 destinés au stockage du logiciel et qui assurent la reconnaissance de périodicité, la sélection des éléments codés de la période devant être recherchée dans la table de référence, la recherche dans celle-ci, le déclenchement de l'affichage en clair de l'identité de l'émetteur et de ses caractéristiques, après identification, et enfin l'affichage d'instructions quant à la marche à suivre, en cas de non-identification.

Le présent appareil s'utilise de la façon suivante : dans le cas de l'identification d'un phare de marine, à chaque éclat de celui-ci, l'opérateur actionne le bouton-poussoir de l'interrupteur 4, produisant de la sorte une série d'impulsions. Ces dernières reproduiront, avec plus ou moins de fidélité, les trains de signaux élémentaires dont est constitué le signal composite périodiquement émis par le phare. Lorsque l'appareil aura enregistré un nombre de séries d'impulsions suffisamment proches de celles émises par le phare tel qu'il puisse procéder à la correction des imprécisions dues à l'enregistrement manuel, un signal optique ou sonore produit par le témoin 5 avertira l'opérateur d'avoir à cesser la manipulation. Le nombre des séries d'impulsions nécessaires pour que ce but soit atteint dépendra de l'habileté de l'opérateur.

Le microprocesseur 7 transforme les intervalles de temps séparant les impulsions en valeurs numériques que, de surcroît, il arrondit.

Ce microprocesseur est également agencé de façon à reconnaître la périodicité des impulsions. A cet effet, et comme des irrégularités dans la vitesse de réaction de l'opérateur se traduisent par des différences d'intervalles de temps, le microprocesseur travaille sur un échantillonnage des trains d'impulsions contenus dans les modules de mémoire vive 11 dans lesquels elles ont été envoyées. Le train d'impulsions finalement reconnu représentatif est alors comparé avec les informations contenues dans les modules de mémoire morte 14 et le résultat de cette comparaison est affiché par le dispositif d'affichage 12 qui donne immédiatement, en clair, l'identité du phare ainsi que les caractéristiques de celui-ci utiles à connaître, telles que sa position, son nom, etc. Le dispositif d'affichage donnera également des instructions à l'opérateur concernant les mesures à prendre en cas de non-identification.

L'appareil, dans une forme d'exécution préférée, aura ses modules de mémoire 11 agencés de façon à pouvoir contenir un nombre d'informations correspondant à dix cycles, par exemple, du phare comportant le plus d'éclats dans sa période.

Il faudra veiller à ce que le découpage de la mémorisation en zones géographiques soit tel qu'il n'y ait pas deux émetteurs de caractéristiques équivalentes dans la même zone.

Les modules de mémoire morte 10, étant interchangeables, seront choisis en fonction de la zone géographique dans laquelle se trouve l'observateur.

## Revendications

1. Appareil d'identification d'un signal composite périodique formé d'un train de signaux élémentaires dont le nombre et la cadence constituent la caractéristique de leur émetteur et, par là, d'identifier cet émetteur, caractérisé par le fait qu'il comprend des moyens (4) permettant à l'utilisateur de l'appareil d'introduire dans celui-ci des impulsions à une cadence correspondant sensiblement à celle desdits signaux élémentaires, une base de temps (2) agencée de façon à mesurer les intervalles de temps séparant l'entrée desdites impulsions, des moyens de traitement d'erreur agencés de façon à reconnaître la périodicité desdites impulsions sur un échantillonnage de trains de celles-ci, des moyens de codage de celui desdits trains périodiques d'impulsions que lesdits moyens de traitement d'erreur auront reconnu comme bon, des moyens de comparaison entre le train d'impulsions reconnu comme bon et des informations contenues dans un stock de référence (14), aux fins de rechercher une équivalence, et des moyens d'affichage (13) de l'équivalence reconnue donnant celle-ci sous une forme permettant l'identification de l'émetteur.

2. Appareil suivant la revendication 1, caractérisé par le fait qu'il comprend un témoin de l'introduction, dans l'appareil, des impulsions correspondant aux signaux élémentaires du signal composite périodique à identifier.

3. Appareil suivant la revendication 1, caractérisé par le fait que lesdits moyens de traitement d'erreur comportent un circuit électronique de comptage transformant les intervalles de temps mesurés par la base de temps en valeurs numériques et des moyens arrondissant lesdites valeurs numériques et une zone mémoire apte à contenir les valeurs exactes numérisées et arrondies desdits intervalles de temps.

4. Appareil suivant la revendication 1, caractérisé par le fait que ledit stock de référence comprend au moins un module de mémoire morte apte à stocker le logiciel de façon à assurer la reconnaissance de périodicité, la sélection des éléments codés de la période devant être recherchée dans un stock de référence, la recherche dans ledit stock, et le déclenchement de l'affichage en clair de l'identité de l'émetteur permettant l'identification immédiate de celui-ci.

5. Appareil suivant la revendication 4, caractérisé par le fait que lesdits moyens d'affichage sont commandés de façon à fournir en clair l'identité de l'émetteur et ses caractéristiques.

6. Appareil suivant la revendication 4, caractérisé par le fait que lesdits moyens d'affichage sont commandés de façon à fournir des instructions en cas de non-identification entre le train d'impulsions reconnu valable et les informations contenues dans le stock de référence.

7. Appareil suivant la revendication 1, caractérisé par le fait que lesdits moyens permettant d'introduire dans l'appareil des impulsions sont agencés de manière à être actionnable manuellement.

## Claims

1. Apparatus enabling the identification of a periodic composite signal made up of a train of elementary signals the number and the rhythm of which constitute the characteristic of their emitter and, hence, of identifying this emitter, characterized by the fact that it comprises means (4) enabling to the user of the apparatus to introduce into the latter pulses at a rhythm corresponding substantially to that of said elementary signals, a time base (2) arranged in such a way as to measure the time intervals separating the input of the said pulses, error treatment means arranged in such a way as to recognize the periodicity of said pulses by a sampling of trains thereof, coding means of that one of said periodic trains of pulses which said error treatment means will have recognized as valuable, means of comparison between the train of pulses recognized as valuable and information contained in a reference stock (14), in order to search for an equivalence, and display means (13) of the equivalence recognized providing this one in a form enabling the identification of the emitter.

2. Apparatus according to claim 1, characterized by the fact that it comprises a check indicator of the introduction, into the apparatus, of the pulses corresponding to the elementary signals of the periodic composite signal to be identified.

3. Apparatus according to claim 1, characterized by the fact that said error treatment means comprise an electronic counting circuit transforming the time intervals measured by the time base into numeric values and means rounding the said numeric values, and a memory zone able to contain the exact numerized and rounded values of said time intervals.

4. Apparatus according to claim 1, characterized by the fact that the said reference stock comprises at least one module of dead memory able to store the logic so as to ensure the recognition of periodicity, the selection of the coded elements of the period which has to be searched in a reference stock, the search through said stock and commencement of the clear display of the identity of the emitter enabling the immediate identification thereof.

5. Apparatus according to claim 4, characterized by the fact that said display means are controlled in such a way as to furnish a clear display of the identity of the emitter and its characteristics.

6. Apparatus according to claim 4, characterized by the fact that said display means are controlled in such a way as to furnish instructions in case of non identification between the train of pulses recognized as valid and the information contained in the reference stock.

7. Apparatus according to claim 1, characterized by the fact that said means enabling to introduce pulses into the apparatus are arranged in such a way as to be manually operable.

**Patentansprüche**

1. Vorrichtung zum Identifizieren eines zusammengesetzten, periodischen Signales, das aus einer Serie von Elementarsignalen besteht, deren Anzahl und zeitliche Abfolge für ihren Sender charakteristisch sind, und somit zum Identifizieren dieses Senders, gekennzeichnet durch Mittel (4), mittels derer der Benutzer der Vorrichtung in diese Impulse eingeben kann, deren zeitliche Abfolge im wesentlichen der der Elementarsignale entspricht, durch eine Zeitbasis (2), welche derart ausgebildet ist, daß sie die Zeitabstände zwischen dem Eingang dieser Impulse mißt, durch Mittel zur Fehlerbehandlung, welche derart ausgebildet sind, daß sie die Periodizität der genannten Impulse an einer Probe der Serie derselben erkennen, durch Mittel zum Codieren derjenigen Serie von Impulsen, welche die genannten Mittel zur Fehlerbehandlung als gut erkannt haben, durch Mittel, um die als gut erkannte Serie von Impulsen mit Informationen zu vergleichen, die in einem Referenzspeicher (14) gespeichert sind, und um eine Übereinstimmung zu suchen, und schließlich durch Mittel (13), welche die erkannte Übereinstimmung darstellen und diese Übereinstimmung in einer Form angeben, welche die Identifikation des Senders ermöglicht.

2. Vorrichtung nach Anspruch 1, gekennzeichnet durch eine Kontroll-Meldeeinrichtung, um die Eingabe von Impulsen in die Vorrichtung anzugeben, welche den Elementarsignalen des zu identifizierenden zusammengesetzten, periodischen Signals entsprechen.

3. Vorrichtung nach Anspruch 1, dadurch gekennzeichnet, daß die Mittel zur Fehlerbehandlung eine elektronische Zählschaltung, welche die von der Zeitbasis gemessenen Zeitintervalle in numerische Werte umformt, Mittel, um diese numerischen Werte zu runden, sowie einen Speicherbereich aufweisen, um die in exakte numerische Werte umgewandelten und gerundeten Werte dieser Zeitintervalle aufzunehmen.

4. Vorrichtung nach Anspruch 1, dadurch gekennzeichnet, daß der Referenzspeicher wenigstens einen Festspeicher zur festen Speicherung der erforderlichen Logik aufweist, um sicherzustellen : die Erkennung der Periodizität, die Auswahl der codierten Elemente der Periode, welche in dem Referenzspeicher gesucht werden müssen, die Nachsuche in diesem Speicher sowie die Auslösung der eindeutigen Anzeige der Identität des Senders, um dessen sofortige Identifikation zu ermöglichen.

5. Vorrichtung nach Anspruch 4, dadurch gekennzeichnet, daß die darstellenden Mittel derart gesteuert sind, daß sie in Klartext die Identität des Senders und seine Merkmale angeben.

6. Vorrichtung nach Anspruch 4, dadurch gekennzeichnet, daß die darstellenden Mittel derart gesteuert sind, daß sie Instruktionen geben, wenn keine Identifizierung zwischen der als gut erkannten Serie von Impulsen einerseits und den im Referenzspeicher gespeicherten Informationen andererseits stattfand.

7. Vorrichtung nach Anspruch 1, dadurch gekennzeichnet, daß die Mittel, um Impulse in die Vorrichtung einzugeben, manuell betätigbar sind.